# EUROPEAN PATENT SPECIFICATION

(11) **EP 2 918 312 B1**
(45) Date of publication and mention of the grant of the patent: **21.09.2016**
(21) Application number: 15164718.7
(22) Date of filing: 19.07.2012
(51) Int. Cl.: A62B 1/02, B66B 5/02, B66B 11/04, E21F 11/00, G21D 1/00, G21D 1/02, G21D 3/06, G21C 9/02, G21C 13/02, G21C 15/18

(54) **GRAVITY ELEVATOR**
SCHWERKRAFTAUFZUG
ASCENSEUR PAR GRAVITÉ

(43) Date of publication of application: 16.09.2015
(62) Divisional of application: 12770173.8
(73) Proprietor: Serbex Tecnología y Valores, S.L., 20011 San Sebastian-Donostia (Gipuzcoa) (ES)
(72) Inventor: Larrion, Javier, 20008 San Sebastián (Guipuzcoa) (ES)
(74) Representative: Carlos Hernando, Borja

(56) References cited:
- US-A- 4 971 752
- US-A1- 2003 168 290
- US-A1- 2011 203 877

## Description

### Object of the Invention

The present invention, relates to a gravity, elevator.

Particularly, a single-use lift elevator for vertical tunnels that can be used in a nuclear power plant or in other installations and situations in which the escape requires going up for operator evacuation in the event of an emergency.

### Description of the State of the Art

It is well known that the main safety problem in nuclear power plants consists of the lack of cooling of the reactor at a given time, the reactor temperature raising and its fuel reacting uncontrollably. The use of gravity elevators, in for example nuclear power plants, without any need for electricity, which only allow going up and are used exclusively in the event of an emergency to escape from inside the power plant is known in the art.

Document US 20110203877 discloses an elevator safety rescue system with an electro-hydraulic system particularly suited for use in rack and pinion drive elevators installed with tall towers, mines, smoke stacks, and other structures having relatively large elevations or depths. The system includes a positive displacement hydraulic pump driven by the output shaft of an electric elevator drive motor. An electro-hydraulic valve is electrically powered to maintain an open condition to allow unrestricted hydraulic flow through the pump during normal operation. In the event of an elevator malfunction, electrical power is terminated to the valve, causing the valve to close and thus requiring all hydraulic fluid to pass through a restrictor

### Description of the Invention

The object of the invention is an emergency gravity elevator for the exit of operators according to the claims.

A power plant or other installations and situations in which the escape requires going up comprise elevators in vertical tunnels to access the underground buildings and tunnels, these elevators being able to be of two types, some being electrically operated so that in normal operating conditions the operators can go up and down, and others being gravity elevators, without any need for electricity, which only allow going up and are used exclusively in the event of an emergency to escape from inside the power plant. The gravity elevators particularly, which are equivalent to emergency elevators that do not require electricity for their exclusive climbing operation, are preferably installed parallel to the elevator for normal use in the vertical escape tunnels and are designed to operate without a motor and without electricity, since they work due to passive elevation using the force of gravity. These elevators can also be used in other installations and situations in which the escape requires going up.

The gravity elevator, which is the object of the present invention, has all the typical constructive elements of any elevator, including all the safety elements, but does not include a motor and therefore has no electric or electronic components, and it is an elevator that can only be used once for a single climb. The elevator car is anchored to the ground from where the emergency climb must take place by means of a restraint cable which can be cut from inside said car in order to use the elevator in the event of an emergency. In the top part, the elevator car is secured to a main cable at the opposite end of which, after looping around a main sheave, there is located a main counterweight which, when the restraint cable is cut, will cause passive elevation of the car with its occupants inside due to gravity.

The existence of a cutting element, preferably an explosive type cutting element, is contemplated for cutting said restraint cable, the existence of manual shears suitably sized so that they can be used by a person of average constitution for cutting the cable manually further being contemplated. Therefore, if upon activating the explosive cable cutting element, which is preferably a dual charge element, the pyrotechnic element fails both times the cable could be cut manually by means of the mentioned shears. Furthermore, all the cavities and actuators necessary for being able to operate the cable cutter from inside as well as for being able to manually cut the cable are placed in the elevator car.

The tension or weight exerted by the main counterweight is slightly greater, by approximately 20%, than the empty weight of the car plus the weight corresponding to the main cable, such that if one or two people enter the car and cut the restraint cable thereof, they will begin to climb up to the surface by the tractive force exerted by gravity as a result of the excess weight of the main counterweight, which maintains a virtually constant climbing tension.

Additionally, the emergency elevator of the invention also contemplates the existence of a system of secondary counterweights. Therefore, if the number of people entering the elevator car to climb up and escape to the surface means that the tension of the main counterweight is not enough to cause the car to climb, secondary cables which are each attached to a secondary counterweight and to a ground anchor will be anchored to it. Once the necessary secondary cables are anchored, the ground anchors of said secondary cables are cut such that the weight of each secondary counterweight transmits the corresponding complementary climbing tension. This occurs until the climb begins.

In any case, once the car starts to lift up, the climbing speed must be controlled by means of additional safety and climbing control systems provided for that purpose, which, for the sake of safety, will preferably be installed in duplicate. Said systems can comprise:
- A brake lever, which is suitably sized so that a person of average constitution can push it with enough force applied to friction blocks which in turn touch a friction track installed along the upward path to thus control the climbing speed.
- A speedometer to control the climbing speed.
- A system of gear wheels meshing, from inside, with a rack installed along the path, all of this sized so that a person of average constitution can make the elevator climb by transmitting manual force to it. The elevator car will always be out of balance for the climb due to the weight imbalance.
- A system of inertia dampers installed at the end of the path (top and bottom) to slow the elevator down such that the inertia withstood by the passengers does not cause vascular damage or damage of any other type.
- The secondary pulling cable anchor systems use dual pyrotechnic systems or a lever system sized for a person of average constitution, which close clamps around the cable, having a non-slip system, coated internally with corundum powder, for example.
- Mini-oxygen cylinders and masks.

Finally, it should be mentioned that all the steel cables are greased, but furthermore, the restraint cables of the secondary counterweights are sheathed in steel tubes to prevent dangerous jerks and snagging that would occur when climbing without tension and once they have been cut.

In turn, in the present invention it must be taken into account that the safety tunnels for external connections and services are preferably vertical, as is the implementation of the different sets of pipes, which are always arranged vertically.

Likewise, all the entrances and exits are protected by pyrotechnic rings to be able to seal off the power plant in the event of an unrecoverable failure thereof.

Finally, the power plant has a transmission line for the generated electric power coming out of the high-low voltage alternators located in an underground building and taking it to the high voltage transformers located in the exterior for transmitting the power to the transmission and distribution network. This line mainly has a superconductor cable to reduce losses in connection between the alternator and high voltage transformers located on the surface.

### Description of the Drawings

Attached to the present specification is a set of drawings which, by way of nonlimiting example, represent a preferred embodiment susceptible to any variations in detail that do not entail a fundamental alteration of the essential features of the invention.
Figure 1 depicts a schematic plan view of the main buildings buried in a nuclear power plant. Figure 2 depicts a schematic side view of the main components of the nuclear power plant.

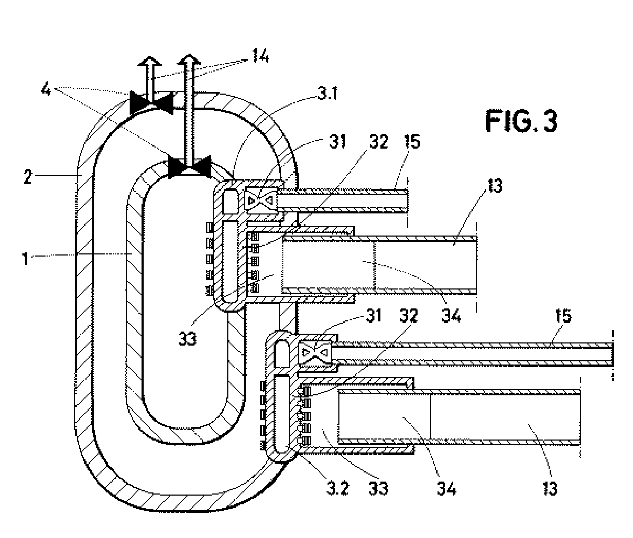

Figure 3 depicts a schematic side view of the reactor vessel and of the reactor core as well as a detail of the thermal fuses and related components.
Figure 4 shows a schematic side view of the reactor containment building and a detail of the fuses and related components.
Figure 5 depicts a schematic elevational view of an embodiment of the emergency elevator object of the invention, the main parts and elements it comprises, as well as the configuration and arrangement thereof, being shown therein.

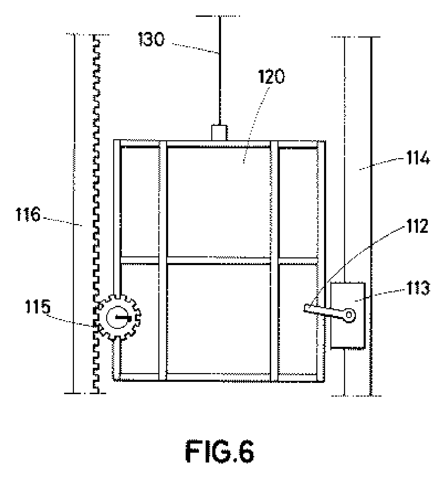

Figure 6 depicts a schematic elevational view of the car with some of the additional climbing speed control systems.

### Preferred Embodiment of the Invention

A detailed description of a nuclear power plant and of a safety system with a fuse element where the elevator of he present invention can be included will be given below.

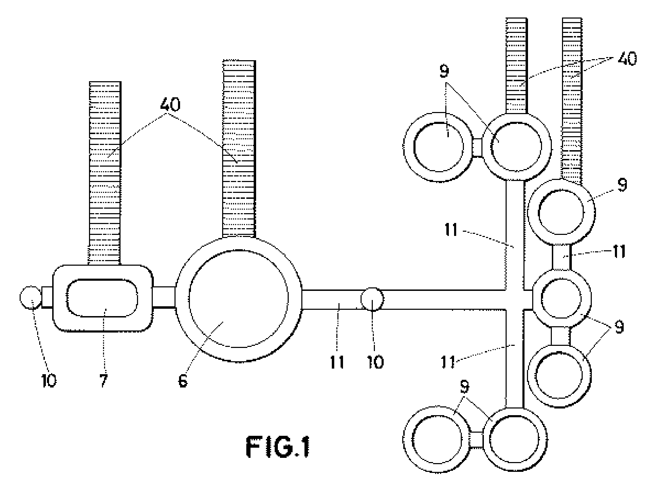

Figure 1 shows the main buildings and rooms, which will be buried, of the power plant for example in a plan view during the construction of the power plant, in which an open pit has been dug using access ramps 40 to the burying levels and the main buildings, namely, the containment building 6, the generation building 7, the different waste and nuclear fuel buildings or warehouses 9, as well as the tunnels 11 horizontally connecting the different buildings with one another, and the vertical tunnels 10 connecting said horizontal tunnels 11 with the surface, have subsequently been built.

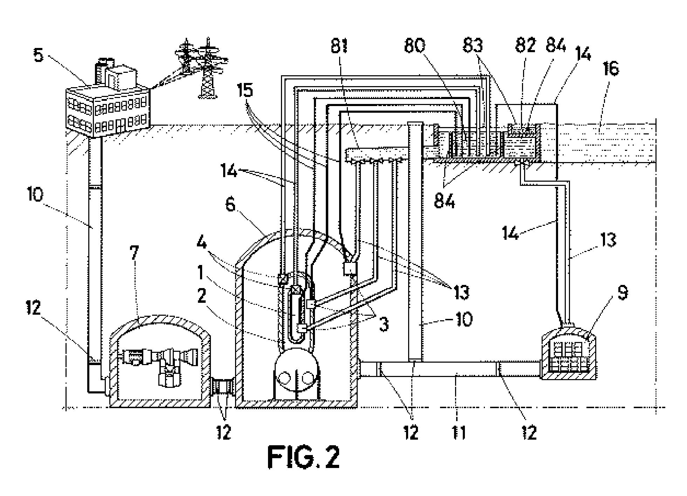

As can be seen in Figure 2, which depicts an already built power plant, all the components of the power plant except the transformer and power plant control building 5, are buried, particularly the containment building 6, with the reactor and the core, the generation building 7, and the fuel element and waste buildings or warehouses 9. The control and electrical transformer building 5 located on the surface is electrically connected with the components of the power generation building (7) for transmitting the generated electric power.

The buried components are located below the level of a main cooling water tank or basin 8 which is connected with an inexhaustible water source such as the sea 16 and located at a sufficient design depth, according to the features of the reactor 1 and the sizing of the design power thereof, the active nuclear part being underground, and only the connection and transmission infrastructure 5 for connecting and transmitting the energy produced to the power grid as well as auxiliary components being located on the surface.

To place the power plant below sea level 16, the terrain where the underground power plant is going to be located is excavated, and after building the plant on said terrain according to suitable construction criteria, such as construction of a concrete compartment, and taking into consideration earthquake-resistance criteria, part of the excavated soil is used to bury the power plant, such that said plant is buried and below the level of the main cooling water tank, i.e., below the sea 16, as well as the main basin 8.

The containment building 6 internally comprises the reactor vessel 2 inside which the core vessel with the reactor core 1 is located. The core 1 is the reactor itself and is formed by fissionable fuel, and it is where a nuclear accident can take place if the temperature thereof gets out of control, being able to melt and forming what is referred to as corium or magma resulting from the elements of the core 1 melting, consisting of nuclear fuel, the covering of the fuel elements and the remaining components of the core with which it comes into contact. The core vessel 1 is a pressure vessel built from carbon steel with a thickness between 20 and 25 cm and with other internal steel coverings and it is the first barrier against the exit of corium. The reactor vessel 2 is the second safety container of the core 1 of the reactor and is built from special steel with a thickness not less than 20 cm. The containment building 6 is the final barrier for containing corium in the event of an accident and is built from high-strength concrete with a thickness of at least 150 cm with an inner lead covering. This building is connected with the power production building 7 and with the nuclear fuel and waste warehouses 9.

The different underground rooms or buildings are communicated with one another by means of horizontal tunnels 11 and with the outside by means of vertical tunnels 10, allowing the transit of operators between the different buildings and with the outside. The horizontal tunnels 11 further comprise preferably manually operated safety hatches 12 which allow isolating the different rooms from one another in the event of an emergency for the main purpose of being able to flood the different rooms with the cooling water from the main water tank or basin 8. The vertical tunnels 11 are arranged in different places in the power plant to facilitate the operator exit in the event of an emergency. Said vertical tunnels 11 preferably comprise electric elevators for use during the normal operation of the power plant, and gravity elevators 100 not requiring electric power and only allowing climbing for operator evacuation in the event of an emergency.

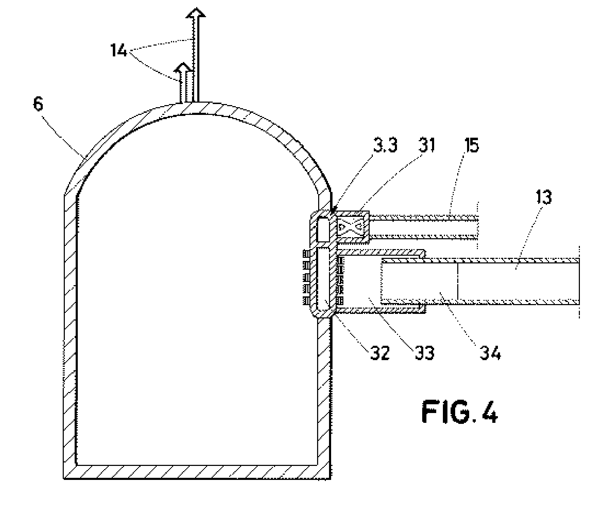

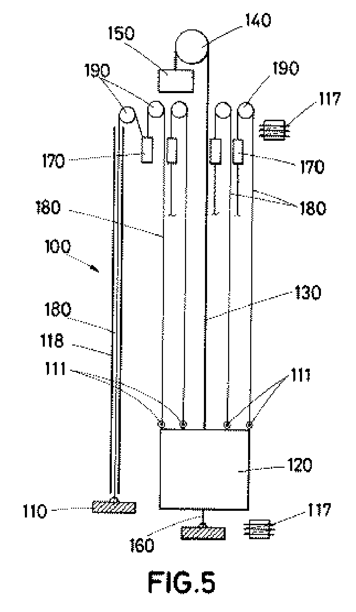

In relation to the gravity elevators 100, which can only be used for a single climb and are preferably arranged parallel to the ordinary operating elevators, Figures 4 and 5 show a diagram of one of said elevators, which constitute an embodiment of the present invention. The elevator 100 in question conventionally comprises a car 120 secured at the top by a main cable 130 looped around a main sheave 140 and incorporates at its opposite end a main counterweight 150, with the particularity that said car 120 is anchored to the ground by means of a restraint cable 160, the weight of said main counterweight 150 being slightly greater by approximately 20%, than the empty weight of the car 120 plus the weight of the main cable 130, such that if one or two people enter the car and cut the restraint cable, the car climbs as the counterweight falls due to gravity.

The elevator has an explosive cutting element for cutting said restraint cable 160 consisting of a dual charge detonating device, as well as a manual cutting element preferably consisting of shears (not depicted). The car 120 further has actuators (not depicted) to operate said cutting elements for cutting the restraint cable 160 from the inside, as well as cavities for accessing them and other additional climb control systems that may be incorporated, as will be explained below.

Additionally, the elevator 100 has a system of secondary counterweights 170 to allow increasing the car capacity. Each of said secondary counterweights 170 is secured to a secondary cable 180 which, looping around a secondary sheave 190, is fixed at one of its ends to a ground anchor 110, whereas at the other end it has means for being fixed to a fastener 111 provided for that purpose in the car 120.

The elevator 100 can have a greater or lesser number of said counterweights and secondary cables and their corresponding ground anchors and fastenings in the car according to the needs in each case. Although Figure 4 depicts several secondary counterweights 170, only one of them has been depicted in its complete form with its ground anchor 110.

Furthermore, as systems of safety and as systems for controlling the climbing speed the elevator can have:
- A brake lever 112 acting on friction blocks 113 which in turn travel on a track 114 installed along the upward path.
- A speedometer.
- Gear wheels 115 meshing with a rack 116 installed along the path.
- Inertia dampers 117 installed at the end of the path.

Furthermore it also has dual explosive cutting elements or a manual lever system (not depicted) for cutting the anchors of the secondary cables 180.

It is important to stress that the end of said secondary cables 180 securing them to the ground anchor 110 are sheathed in steel tubes 118 as a protection system to prevent jerks when climbing without tension. The car 120 also has mini-oxygen cylinders and masks (not depicted).

Continuing with the description of the power plant, the cooling water tank 8 is a main basin containing borated water and it is connected with the sea 16 as an inexhaustible water and cooling source, and it is in turn connected with at least one secondary basin 82 where a borated solution is stored. Said basins are located below sea level 16 and above the buried buildings, being connected with the sea and with one another by means of floats which open gate valves that allow feeding water and maintaining the level thereof. The main basin 8 or an underground appendage 81 thereof is connected with the different buildings by means of cooling pipes 13 which carry the borated water from said basin 8 due to gravity, without the need for pumps. Likewise, the outlets of the pipes used for steam exhaust 14, 15 in the event of an accident which come from the different buildings, mainly the containment building 1, end at the bottom of said basin 8 such that the contaminated steam condenses as it comes into contact with the water of the basin 8.

The main basin 8 and secondary basin 82 comprise covers or plates 83 floating on the water contained therein, said plates 83 being anchored to the bottom of the basins 8, 82. Said plates 83 will preferably be built by means of a stainless steel grid covered with a polymer foam that is thick enough for the plates to float on the water, and that is resistant to solar radiation to prevent evaporation of the water and resistant to etching caused by the seawater. The mentioned plates or covers 83 are anchored to the bottom of the basins 8, 82 by means of cables 84 with high tensile strength resistant to seawater and with a length equal to the maximum height of the walls of each basin 8, 82. Said material can be steel or a polymer. These floating plates 83 minimize the mixture of seawater and of other elements with the borated water of the basins 8, 82. The basins could also incorporate fixed structures covering their surface (not shown).

The cooling pipes 13 connect with the containment building 6 through fuse elements 3 which are incorporated in the walls of the containment building 6, of the reactor vessel 2 and of the core vessel 1. It can evidently be located in only one of the walls of one of the elements. Each fuse element 3 comprises a hatch 32 that opens automatically in the event of nuclear reactor overheating which is formed by an eutectic alloy material 32 having features similar to the walls separating the different elements of the reactor from one another, the core vessel 1, the reactor vessel 2 and the containment building 6, but which are susceptible to melting in overheating conditions and communicate each of the elements 1, 2, 6, with at least one cooling pipe 13, preferably more than one pipe, in an attempt to obtain safety redundancy, which in turn connects with the main basin 8.

The reactor has a double steel vessel and is provided with at least two fuses 3.1, 3.2, one in each of the inner vessel or core vessel 1 and outer vessel or the reactor vessel 2, respectively, connected with independent borated water ducts 13.1, 13.2, each one being able to circulate the borated water between each inner and outer vessel. As described above, the reactor is enclosed in a containment building 6 also preferably provided with a third fuse 3.3 connected to a third pipe 13.3 to allow the entrance of cooling borated water.

As mentioned, the fuse 3 is ceramic or metal a hermetic sealing calculated for being melted when a specific temperature is reached and is integrated in the walls of the vessels 1, 2 or of the containment building 6. It is particularly integrated in said walls by means of a solid anchor either by welding or by screws, forming part of the wall as it has the same features as said wall, namely, the same mechanical strength as any other part of the wall, or of the core vessel 1 or the reactor vessel 2, or of the containment building 6.

The fuses 3 melt suddenly at a predetermined temperature to make way for the borated water that floods and cools the inside of any of the vessels 1, 2 or the containment building 6. The fuses 3 comprise a cover made from an eutectic material 32 and designed for being melt when a predetermined or set-point temperature is reached, followed by an insulating material 33 and an insulating cover 34. The melting point of the eutectic material will range between 2000 and 2500°C and once the melting temperature is reached, it will melt all of a sudden.

Arranged after said eutectic cover 32 there is an insulating plug 33, after which there is located an insulating cover 34. These two elements serve to prevent the heat of the eutectic cover 32 during the ordinary operation of the power plant from being transmitted to the borated water contained in the pipe 13 which is connected with the thermal fuse 3, this heating being able to cause a dangerous pressure increase in the pipe 13.

In the event of the core 1 overheating and once the melting temperature of the eutectic material is reached, which will be less than the melting temperature of the core 1, the eutectic cover 32 melts suddenly, causing the hydrostatic pressure of the water column of the cooling pipe 13 connected to the borated water basin 8 to push the insulating cover 34 on the thermal insulating plug 33, making them enter the core 1 and opening up the access path of the borated water into the building 6 or vessel 1, 2 to cool the reactor.

The fuse 3 preferably has in its lower part a specific housing for housing a low pressure valve 31, connected with low pressure pipes 15 which open up once the first boil-off gases are produced when the borated water comes into contact with the hot elements of the inside of the vessels 1, 2 or of the building 6. Since the eutectic alloy of the cover 32 melts suddenly due to the effect of the hydrostatic pressure of the water column, at first the water enters the vessels 1, 2 or building 6 because the mentioned low pressure relief valves 31 instantaneously prevent the water column from being pushed upwards or towards the basin 8.

The reactor is also provided with high pressure and temperature safety valves 4 connected with high pressure pipes 14 for blowing off the high pressure surges that may occur with the entrance of borated water into the core 1 and into the core vessel 2.

On the other hand, the power plant has a pumping station for recovering the plant by means of extracting the cooling water into the borated water basin through the reactor gas outlet or exhaust pipes (core and core vessel).

The cooling system using borated water extends not only to the reactor 1, 2 and its containment building 6 but to other buildings such as the power generation building 7 containing the turbines and alternators or the fuel storage building 9 or any other room with radioactive material that must be flooded and cooled in the event of an accident.

On the other hand, the power plant and all its entrances and exits are surrounded by pyrotechnic rings for blasting the plant in the event of an emergency and permanently sealing it off.

Finally, the shape, materials and dimensions may be variable and generally insofar as it is accessory and secondary, provided that it does not alter, change or modify the essential nature of the improvements herein described.

## Claims

1. A single-use lift elevator for vertical tunnels, of the type having a car (120) secured at the top by a main cable (130) looped around a main sheave (140) and the opposite end of which incorporates a main counterweight (150),
**characterized in that**
it works without electric power and exclusively using the force of gravity, and wherein:
- said car (120) is anchored to the ground by means of a restraint cable (160);
- the weight of said main counterweight (150) is greater than the empty weight of the car (120), plus the weight of the main cable (130); and
- it has at least one explosive cutting element and at least one manual cutting element for cutting the restraint cable (160).

2. The elevator according to claim 1, **characterized in that** the car (120) comprises actuators to operate the cutting elements of the restraint cable (160) from the inside.

3. The elevator according to claim 1, **characterized in that** it comprises safety elements and climbing speed control elements.

4. The elevator according to claim 1, **characterized in that** the weight of the main counterweight (150) is at least 20% greater than the sum of the empty weight of the car (120) plus the main cable (130).

5. The elevator according to claim 1 or 2, **characterized in that** the explosive cutting element is a dual charge detonating element.

6. The elevator according to claim 1 or 2, **characterized in that** the manual cutting element is shears.

7. The elevator according to claim 1, **characterized in that** it comprises at least one secondary counterweight (170) which is secured to a secondary cable (180) which, looping around a secondary sheave (190), is fixed at one of its ends to a ground anchor (110) and at the other end has means for being fixed to a fastener (111) provided in the car (120).

8. The elevator according to claim 7, **characterized in that** the car (120) comprises cutting elements for cutting the anchors of the secondary cables (180).

9. The elevator according to claim 3, **characterized in that** it comprises at least one brake lever (112) acting on at least one friction block (113) which travels along a track (114) installed along the upward path.

10. The elevator according to claim 3, **characterized in that** it comprises at least one speedometer.

11. The elevator according to claim 3, **characterized in that** it comprises gear wheels (115) meshing with a rack (116) installed along the path.

12. The elevator according to claim 3, **characterized in that** it comprises inertia dampers (117) installed at the end of the path.

## Patentansprüche

1. Einweg-Lift-Aufzug für vertikale Tunnel, des Typs, der eine Aufzugskabine (120), die oben durch ein um eine Haupttreibscheibe (140) geschlungenes Hauptseil (130) gesichert ist, aufweist, und deren entgegengesetztes Ende ein Hauptgegengewicht (150) enthält, **dadurch gekennzeichnet, dass** er ohne elektrische Energie funktioniert und ausschließlich Schwerkraft verwendet, und wobei:
- die Aufzugskabine (120) mit dem Boden mittels eines Rückhalteseils (160) verankert ist;
- das Gewicht des Hauptgegengewichts (150) größer ist als das Leergewicht der Aufzugskabine (120) zuzüglich des Gewichts des Hauptseils (130); und
- sie mindestens ein explosives Schneideelement und mindestens ein manuelles Schneideelement zum Schneiden des Rückhalteseils (160) hat.

2. Aufzug nach Anspruch 1, **dadurch gekennzeichnet, dass** die Aufzugskabine (120) Aktuatoren umfasst, um die Schneideelemente des Rückhalteseils (160) von innen zu betätigen.

3. Aufzug nach Anspruch 1, **dadurch gekennzeichnet, dass** er Sicherheitselemente und Steiggeschwindigkeitskontrollelemente umfasst.

4. Aufzug nach Anspruch 1, **dadurch gekennzeichnet, dass** das Gewicht des Hauptgegengewichts (150) mindestens 20 % größer ist als die Summe des Leergewichts der Aufzugskabine (120) zuzüglich des Hauptseils (130).

5. Aufzug nach Anspruch 1 oder 2, **dadurch gekennzeichnet, dass** das explosive Schneideelement ein Doppelladung-detonierendes Element ist.

6. Aufzug nach Anspruch 1 oder 2, **dadurch gekennzeichnet, dass** das manuelle Schneideelement eine Schere ist.

7. Aufzug nach Anspruch 1, **dadurch gekennzeichnet, dass** er mindestens ein sekundäres Gegengewicht (170), welches an einem Sekundärseil (180), welches, sich um eine Sekundärtreibscheibe (190) schlingend, an seinem einen Ende an einem Bodenanker (110) befestigt ist und am anderen Ende Mittel hat, um an einem Befestigungselement (111), das in der Aufzugskabine (120) vorgesehen ist, befestigt zu werden, umfasst.

8. Aufzug nach Anspruch 7, **dadurch gekennzeichnet, dass** die Aufzugskabine (120) Schneideelemente zum Schneiden der Anker der Sekundärkabel (180) umfasst.

9. Aufzug nach Anspruch 3, **dadurch gekennzeichnet, dass** er mindestens einen Bremshebel (112), einwirkend auf mindestens einen Reibungsblock (113), welcher entlang einer längs des Aufwärtsweges installierten Führung (114) läuft, umfasst.

10. Aufzug nach Anspruch 3, **dadurch gekennzeichnet, dass** er mindestens einen Geschwindigkeitsmesser umfasst.

11. Aufzug nach Anspruch 3, **dadurch gekennzeichnet, dass** er Zahnräder (115), die mit einer entlang des Weges installierten Zahnstange (116) ineinandergreifen, umfasst.

12. Aufzug nach Anspruch 3, **dadurch gekennzeichnet, dass** er Trägheitsdämpfer (117), die am Ende des Weges installiert sind, umfasst.

## Revendications

1. Ascenseur de montée à usage unique pour tunnels verticaux, du type ayant une cabine (120) attachée au-dessus par un câble principal (130) enroulé autour d'une poulie principale (140) et dont l'extrémité opposée incorpore un contrepoids principal (150),
**caractérisé en ce que**
il fonctionne sans énergie électrique et en utilisant exclusivement la force de gravité, et dans lequel :
- ladite cabine (120) est ancrée au sol au moyen d'un câble de retenue (160) ;
- le poids dudit contrepoids principal (150) est plus important que le poids vide de la cabine (120), plus le poids du câble principal (130) ; et
- il a au moins un élément de coupe explosif et au moins un élément de coupe manuel pour couper le câble de retenue (160).

2. Ascenseur selon la revendication 1, **caractérisé en ce que** la cabine (120) comprend des actionneurs pour opérer les éléments de coupe du câble de retenue (160) de l'intérieur.

3. Ascenseur selon la revendication 1, **caractérisé en ce qu'**il comprend des éléments de sécurité et des éléments de contrôle de vitesse d'ascension.

4. Ascenseur selon la revendication 1, **caractérisé en ce que** le poids du contrepoids principal (150) est au moins 20 % plus important que la somme du poids vide de la cabine (120) plus le câble principal (130).

5. Ascenseur selon les revendications 1 ou 2, **caractérisé en ce que** l'élément de coupe explosif est un élément de détonation à double charge.

6. Ascenseur selon les revendications 1 ou 2, **caractérisé en ce que** l'élément de coupe manuel est une cisaille.

7. Ascenseur selon la revendication 1, **caractérisé en ce qu'**il comprend au moins un contrepoids secondaire (170) qui est attaché à un câble secondaire (180) qui, s'enroulant autour d'une poulie secondaire (190), est fixé à l'une de ses extrémités à un ancrage au sol (110) et a à l'autre extrémité des moyens pour être fixé à un élément de serrage (111) pourvu dans la cabine (120).

8. Ascenseur selon la revendication 7, **caractérisé en ce que** la cabine (120) comprend des éléments de coupe pour couper les ancrages des câbles secondaires (180).

9. Ascenseur selon la revendication 3, **caractérisé en ce qu'**il comprend au moins un levier de frein (112) agissant sur au moins un bloc de friction (113) qui se déplace le long d'une voie (114) installée le long du parcours vers le haut.

10. Ascenseur selon la revendication 3, **caractérisé en ce qu'**il comprend au moins un indicateur de vitesse.

11. Ascenseur selon la revendication 3, **caractérisé en ce qu'**il comprend des roues dentées (115) s'engrenant avec une crémaillère (116) installée le long du parcours.

12. Ascenseur selon la revendication 3, **caractérisé en ce qu'**il comprend des amortisseurs à inertie (117) installés à l'extrémité du parcours.
